# EUROPÄISCHE PATENTSCHRIFT

(11) **EP 0 902 247 B1**
(45) Veröffentlichungstag und Bekanntmachung des Hinweises auf die Patenterteilung: **16.10.2002**
(21) Anmeldenummer: 98810859.3
(22) Anmeldetag: 31.08.1998
(51) Int. Cl.: F28C 1/14, F28F 27/00

(54) **Verfahren zum Betrieb eines Nass-Trocken-Kühlturmes**
Operating method for a dry / wet cooling tower
Procédé de fonctionnement d'une tour de refroidissement sèche / humide

(30) Priorität: 11.09.1997 DE 19739724
(43) Veröffentlichungstag der Anmeldung: 17.03.1999
(73) Patentinhaber: Alstom, 75116 Paris (FR)
(72) Erfinder: Fischer, Kurt, 5507 Mellingen (CH); Liebig, Erhard, Dr., Laufenburg (DE); Schütz, Walter, 4654 Lostorf (CH); Stirnimann, Franz, 8800 Thalwil (CH)
(74) Vertreter: Liebe, Rainer

(56) Entgegenhaltungen:
- CH-A- 522 866
- DE-C- 19 521 814
- US-A- 5 106 543

## Beschreibung

### Technisches Gebiet

Die Erfindung betrifft ein Verfahren zum Betrieb eines auf eine bestimmte Last und auf vorgegebene klimatische Randbedingungen ausgelegten Nass-Trocken-Kühlturmes mit einer zumindestens teilweisen Reihenschaltung von Trockenteil und Nassteil bei extremen Wetterlagen, d. h. bei Abweichungen von den vorgegebene klimatischen Randbedingungen, zwecks Einhaltung der Schwadenfreiheit.

### Stand der Technik

Nass-Trocken-Kühltürme, auch als Hybridkühltürme bezeichnet, werden in Energieversorgungsuntemehmen in erster Linie eingesetzt, um in einem möglichst grossen Lastbereich und unter standorttypischen Klimabedingungen, mit Ausnahme extremer Klimasituationen, sichtbare Kühlturmschwaden, d.h. für die Umgebung Tropfenauswurf, Eisregen und Flächenvereisungen sowie Beschattung je nach Schwadendimension und -ausbreitung, zu vermeiden. Die Forderung der Kunden nach einer Schwadenfreiheitsgarantie auch bei extremen Betriebsbedingungen, z. B. Dampfturbinenbypassbetrieb, bzw. extremen Wetterlagen gewinnt dabei aus ökologischen Gesichtspunkten immer mehr an Bedeutung.

Die heute am häufigsten angewandte Bauart der Hybridkühltürme ist die kühlwasserseitige Reihenschaltung und die kühlluftseitige Parallelschaltung von Trockenund Nassteil (s. A. Streng: "Kombinierte Nass-/Trockenkühltürme in Zellenbauweise", BWK, Heft 5/1995, S. 218-224).

Die Auslegung erfolgt seitens der Kühlturmhersteller so, dass die Mischung aus übersättigter Kühlluft des Nassteiles mit erwärmter, d.h. getrockneter Kühlluft des Trockenteiles beim Verlassen des Kühlturmes und der Mischung mit der Umgebungsluft keine sichtbaren Abluftschwaden entstehen lässt. Dabei muss bei der Mischung von Kühlturmabluft und Umgebungsluft in der Praxis in jedem Falte ein ausreichender Sicherheitsabstand zur Sättigungslinie erhalten bleiben. Das Verhältnis von Wärmeabgabe im Trockenteil zu Wärmeabgabe im Nassteil beträgt etwa 1:5.

Aus DE 195 21 814 C1 ist ein Verfahren zur Steuerung des Luftmengenverhältnisses eines Nass-Trocken-Kühlturmes bekannt, mit dem der Energieverbrauch für die Erzeugung des den Trockenteil beaufschlagten Kühlluftstromes auf diejenige Energiemenge beschränkt wird, die im jeweiligen Betriebszustand gerade zur Einhaltung der Schwadenfreiheit benötigt wird. Das Verfahren ist gekennzeichnet durch Messung der Temperatur und relativen Luftfeuchte der Umgebungsluft und der Temperatur der Abluft sowohl des Trockenteils als auch des Nassteiles als Parameter des jeweiligen Betriebszustandes, durch Ermittlung des erforderlichen Verhältnisses der Luftmengenströme einerseits des Nassteiles und andererseits des Trockenteiles anhand dieser Parameter unter Vorgabe eines unter 100% relativer Luftfeuchte liegenden Grenzwertes und durch Steuerung des ermittelten Luftdurchsatzes durch den Trockenteil unter Beibehaltung des für die jeweilige Kühlleistung erforderlichen Luftstromes durch den Nassteil. Nachteilig an diesem Verfahren sind die aufwendige Jalusiesteuerung und die Lüftersteuerung für den Trocken- und Nassteil, welche drehzahlgeregelte oder mehrstufige Motoren bzw. Thyristormotoren erfordert und sehr teuer ist. Es erfolgt nur eine luftseitige Einflussnahme bei Garantie der Kaltwassertemperatur. Ausserdem funktioniert dieses Verfahren hinsichtlich der klimatischen Randbedingungen nur bis zum thermischen Schwadenauslegungspunkt.

Bei extremen Wetterlagen, wie sie beispielsweise für tropisches Klima typisch sind, wenn am Morgen niedrige Temperaturen und sehr hohe Luftfeuchtigkeit herrschen, kann Schwadenfreiheit mit einer kühlluftseitigen Beeinflussung des Kühlturmbetriebes bzw. mit dem Zu- oder Abschalten von Zellen nicht erreicht werden.

### Darstellung der Erfindung

Die Erfindung versucht, diese Nachteile zu vermeiden. Ihr liegt die Aufgabe zugrunde, ein einfaches Verfahren zum Betrieb eines auf eine bestimmte Last bei vorgegebenen klimatischen Randbedingungen ausgelegten Nass-Trocken-Kühlturmes zu schaffen, mit dem auch bei extremen Witterungsbedingungen, d. h. auch ausserhalb des schwadenfrei garantierten Klimabereiches, soweit als möglich Schwadenfreiheit erreicht werden kann.

Erfindungsgemäss wird das dadurch erreicht, dass bei extremen Wetterlagen der Kaltwasserleitung im Bereich zwischen Austritt Pumpe und Eintritt Kondensator ein Kaltwasserbypassmassenstrom entnommen wird, welcher über eine Kaltwasserrezirkulationsleitung in den Kühlturm geführt wird, wobei die Grösse des Kaltwasserbypassmassenstromes durch Betätigung eines in der Rezirkulationsleitung angeordneten Stellorganes den jeweiligen Bedingungen angepasst wird.

Dadurch wird die Kühlwassermenge durch den Dampfturbinenkondensator reduziert, was wiederum zu einem Anheben der Warmwassertemperatur (Eintrittstemperatur in den Kühlturm) führt. Durch Rezirkulieren von Kaltwasser aus der Kühlturmtasse wird die Verdunstung im Nassteil reduziert. Bei extremen Wetterbedingungen, z. B. tropisches Klima mit tiefen Temperaturen und hoher Luftfeuchtigkeit am Morgen, kann somit auf einfache Weise Schwadenfreiheit erzielt werden.

Es ist vorteilhaft, wenn der Kaltwasserbypassmassenstrom dem für den Nassteil vorgesehenen Kühlwassermassenstrom vor dessen Eintritt in den Nassteil beigemischt und anschliessend dieses Gemisch über den Nassteil abgeleitet wird. Hier sind die verschiedensten Eingriffsorte für die Beimischung des Kaltwasserbypassmassenstromes realisierbar, beispielsweise kann die Beimischung in den vom Trockenteil kommenden Kühlwassermassenstrom erfolgen, oder die Beimischung des Kaltwassermassenstromes geschieht in ein Gemisch aus vom Trokkenteil kommenden Kühlwassermassenstrom und direkt für den Nassteil vorgesehenen Kühlwassermassenstrom. Schliesslich ist es auch möglich, den Kaltwasserbypassmassenstrom dem direkt für den Nassteil vorgesehenen Kühlwassermassenstrom beizumischen.

Unter gewissen Bedingungen kann es ausreichend sein, wenn der Kaltwasserbypassmassenstrom in den Sammelbehälter des Kühlturmes zurückgeführt wird.

### Kurze Beschreibung der Zeichnung

In der Zeichnung sind mehrere Ausführungsbeispiele der Erfindung anhand von Nass-Trocken-Kühltürmen in Zellenbauweise, welche beispielsweise in einem kombinierten Gas- und Dampfturbinenkraftwerk eingesetzt werden, dargestellt.

Es zeigen:
- Fig. 1: einen schematischen Querschnitt einer Zelle des Nass-Trocken-Kühlturmes mit wasserseitiger Reihenschaltung von Trocken- und Nassteil mit einer ersten Ausführungsvariante der Erfindung;
- Fig. 2: einen schematischen Querschnitt einer Zelle des Nass-Trocken-Kühlturmes mit wasserseitiger Reihenschaltung von Trocken- und Nassteil mit einer zweiten Ausführungsvariante der Erfindung;
- Fig. 3: einen schematischen Querschnitt einer Zelle des Nass-Trocken-Kühlturmes mit wasserseitiger Reihen- und Parallelschaltung von Trokken- und Nassteil mit einer dritten Ausführungsvariante der Erfindung.

Es sind nur die für das Verständnis der Erfindung wesentlichen Elemente gezeigt. Die Strömungsrichtung der Medien ist mit Pfeilen bezeichnet.

### Weg zur Ausführung der Erfindung

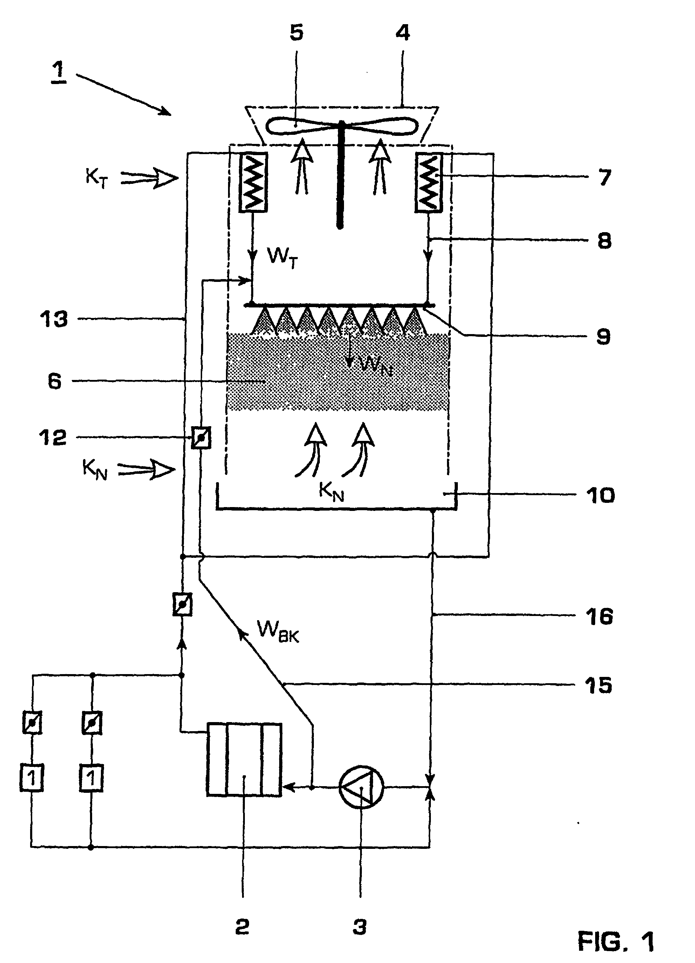

Die Erfindung wird nachfolgend anhand von Ausführungsbeispielen und der Fig. 1 bis 3 näher erläutert.

Fig. 1 zeigt in einem Querschnitt schematisch den Aufbau eines kühlluftseitig parallel und wasserseitig in Reihe geschalteten Nass-Trocken-Kühlturmes. Der Kühlturm ist für einen Nennbetrieb ausgelegt, der sich auf 100 % Dampfturbinenlast bei vorgegebenen durchschnittlichen klimatischen Bedingungen bezieht.

In Fig. 1 ist nur eine Kühlturmzelle 1 abgebildet, weitere Zellen 1 sind im linken Teil von Fig. 1 nur angedeutet. Der Nass-Trocken-Kühlturm ist in ein nicht dargestelltes Kombikraftwerk integriert. Fig. 1 zeigt neben dem Kühlturm lediglich noch den in den Kühlwasserkreislauf integrierten Kondensator 2 und die Kühlwasserpumpe 3. Der Kühlturm weist einen kreiszylindrischen Kühlturmaustritt 4 auf, in dem ein Ventilator 5, welcher den gesamten Zug im Kühlturm erzeugt, angeordnet ist. Der Nassteil 6 des Kühlturmes besteht aus Rieseleinbauten, denen das zu kühlende Wasser W_{T}, welches vorher über eine Steigleitung 13 dem Trockenteil 7 zugeführt, über diesen abgeleitet und anschliessend über eine Leitung 8 einer Verteileinrichtung 9 (Sprühbühne) zugeführt wurde, über die Verteileinrichtung 9 von oben her aufgegeben wird. Die Rieseleinbauten werden von unten her im Gegenstrom zum Kühlwasser W_{N} mit einem Kühlluftstrom K_{N} beaufschlagt. Das aus dem Nassteil 6 abtropfende gekühlte Wasser W_{N} sammelt sich in einem Bekken 10 am Boden des Kühlturmes, von dem aus es anschliessend erneut dem Kraftwerkskreislauf zugeführt wird. Der Trockenteil 7 wird aus Wärmetauschern gebildet und befindet sich oberhalb der Verteileinrichtung 9 für den Nassteil 6. Der vom Ventilator 5 angesaugte Kühlluftstrom K_{T} vermischt sich mit dem Kühlluftstrom K_{N}, welcher zuvor noch über einen nicht dargestellten Tropfenabscheider geleitet wurde. Anschliessend wird die aufgeheizte Luft am Kühlturmaustritt in die Atmosphäre ausgetragen.

Bei Nennlast und "normalen" Klimaverhältnissen wird der Nass-Trocken-Kühlturm wie oben beschrieben betrieben, es gibt keine Probleme bezüglich Schwadenfreiheit, da der Kühlturm auf diese Bedingungen ausgelegt ist.

Bei extremen Klimabedingungen, die beispielsweise morgens in den Tropen auftreten, wenn tiefe Temperaturen und mit einer hohen Luftfeuchtigkeit gekoppelt sind, wird entsprechend der Erfindung eine Kaltwasserrezirkulationsleitung 15 in Betrieb gesetzt, welche von der Kühlwasserleitung 16 nach dem Austritt aus der Pumpe 3 bzw. vor Eintritt in den Kondensator 2 abzweigt und in die Leitung 8 mündet. In der Leitung 15 ist ein Stellorgan, beispielsweise ein Ventil 12 angeordnet, mit dem die jeweils erforderliche Grösse des durch die Leitung strömenden Kaltwasserbypassmassenstromes W_{BK} eingestellt werden kann. Das Ventil 12 kann bei für die Schwadenbildung unproblematischer Wetterlage völlig geschlossen werden.

Erfindungsgemäss wird nun bei extremen klimatischen Bedingungen dem Kühlwassermassenstrom W_{T}, welcher bereits über den Trockenteil 7 geleitet wurde, vor seinem Eintritt in den Nassteil 6 der Kaltwasserbypassmassenstrom W_{BK} beigemischt. Dieses Kaltwasser wird der Kühlwasserleitung 16 vor dem Eintritt in den Kondensator 2 entnommen, d.h. es erfolgt ein Bypassen des Kondensators 2. Es wird die Kühlwassermenge durch den Dampfturbinenkondensator reduziert, was wiederum zu einem Anheben der Warmwassertemperatur (Eintrittstemperatur in den Kühlturm) um z. B. 5 °C, führt. Dieser Wert ist ausreichend, um bei extremen Wetterbedingungen, z. B. tropisches Klima mit tiefem Temperaturen und hoher Luftfeuchtigkeit am Morgen, Schwadenfreiheit erreichen zu können.

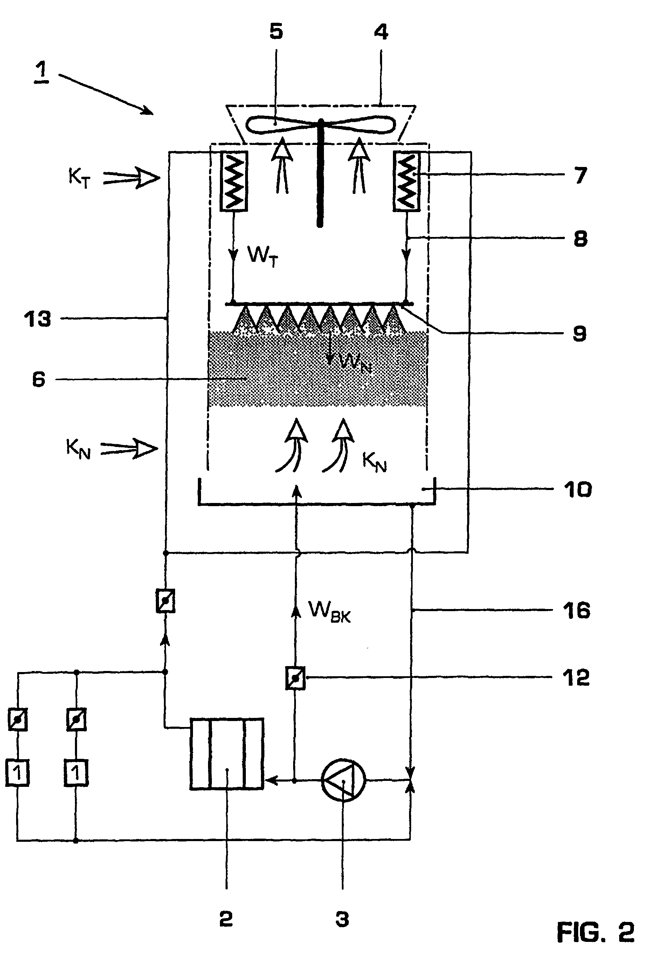

Fig. 2 zeigt eine zweite Ausführungsvariante der Erfindung. Die Schaltung unterscheidet sich von Fig. 1 nur dadurch, dass die Kaltwasserrezirkulationsleitung 15, welche von der Leitung 16 ebenfalls nach dem Austritt aus der Kühlwasserpumpe 3 abzweigt und in der ebenfalls ein Ventil 12 angeordnet ist, in das Sammelbekken 10 mündet. Bei extremen Wetterbedingungen wird somit der über das Organ 12 in seiner Grösse regulierbare Kaltwasserbypassmassenstromes W_{BK} direkt vom Austritt der Pumpe 3 in das Sammelbecken geleitet Die Austrittstemperatur im Kondensator steigt an und Schwadenfreiheit wird erreicht.

Selbstverständlich ist die erfindungsgemässe Fahrweise nicht auf Kühltürme mit einer reinen wasserseitigen Reihenschaltung von Trockenteil 7 und Nassteil 6 begrenzt, sondern sie ist auch anwendbar für Nass-Trocken-Kühltürme mit einer wasserseitigen kombinierten Reihen- und Parallelschaltung.

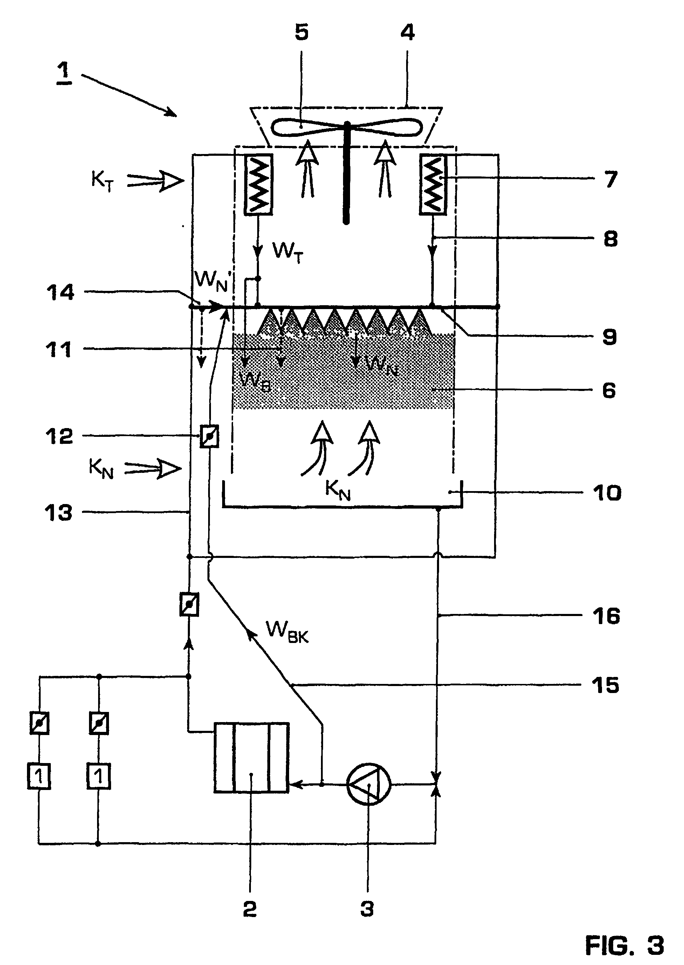

Fig. 3 zeigt ein derartiges Ausführungsbeispiel, bei dem der Kühlturm mit einer wasserseitigen Reihen- und Parallelschaltung von Trockenteil 7 und Nassteil 6 versehen ist. Vom Steigrohr 13 zweigt hier eine Leitung (Abzweigung 14) ab, über welche ein Teil des Kühlwassers (Kühlwassermassenteilstrom W_{N'}) am Trockenteil 7 vorbeigeführt wird. Bei dieser Ausführungsvariante werden beispielsweise 40% des gesamten Kühlwassers für den Trockenteil 7 und 60% direkt für den Nassteil 6 vorgesehen. Im Nennbetrieb wird der über den Trockenteil 7 abgelaufene Teilstrom W_{T} mit dem abgezweigten Teilstrom W_{N'} gemischt und danach gemeinsam als W_{N} dem Nassteil 6 zugeführt. Bei vom Nennbetrieb extrem abweichenden Lastbedingungen wird der Nassteil 6 zwecks Gewährleistung der Schwadenfreiheit zum Teil gebypasst. Dazu wird von dem vom Trockenteil 7 kommenden Wasserstrom W_{T}, welcher über die Leitung 8 der Verteileinrichtung 9 und damit dem Nassteil 6 zugeführt wird, vorher ein bestimmter Anteil W_{B} abgezweigt und über die Leitung 11 am Nassteil 6 vorbei abgeführt. Der über die Leitung 14 gehende Kühlwassermassenteilstrom W_{N'} wird mit dem vom Trockenteil 7 kommenden verbleibenden Teilstrom W_{T} gemischt und dann über die Verteileinrichtung 9 versprüht. Wie in Fig. 3 mit den beiden gestrichelten Linien dargestellt, kann die Bypassleitung 11 auch von der Leitung 14, in welcher der noch ungekühlte Kühlwassermassenstrom W_{N}' entlangströmt, abzweigen oder die Leitung 11 zweigt erst nach der Mischung der beiden Teilströme W_{N}' und W_{T} ab. Welche der möglichen Varianten angewendet wird, hängt von den jeweiligen konkreten Bedingungen ab.

Erfindungsgemäss wird bei extremen Wetterlagen zur Einhaltung der Schwadenfreiheit die Kaltwasserrezirkulationsleitung 15 durch Öffnen des Ventiles 12 in Betrieb gesetzt. Die Leitung 15 mündet in die Leitung 14 oder direkt in die Verteileinrichtung 9. Dadurch wird dem im Nassteil 6 zu versprühenden Kühlwassermassenstrom vor seinem Eintritt in den Nassteil 6 ein Kaltwasserbypassmassenstrom W_{BK} beigemischt. Wie bereits bei den anderen Ausführungsbeispielen beschrieben, wird dadurch die Kühlwassermenge durch den Dampfturbinenkondensator reduziert, was wiederum zu einem Anheben der Warmwassertemperatur (Eintrittstemperatur in den Kühlturm) führt. Bei extremen Wetterbedingungen, z. B. tropisches Klima mit tiefem Temperaturen und hoher Luftfeuchtigkeit am Morgen, kann dadurch Schwadenfreiheit erreicht werden.

Selbstverständlich ist die Erfindung nicht auf die hier gezeigten Ausführungsbeispiele beschränkt. Die Erfindung ist beispielsweise auch bei Kühltürmen mit luftseitiger Reihenschaltung anwendbar, ebenso in Dampfturbinenkraftwerken. Die Kühltürme können auch auf eine grössere Last als auf eine Nennlast von 100 % Dampfturbinenlast ausgelegt sein. Ausserdem ist die erfindungsgemässe Fahrweise auch kombinierbar mit einer Reduktion des in den Kühlturm eintretenden Wassermassenstromes und gegebenenfalls einer Abschaltung einer bestimmten Zellenzahl bei Teillastbedingungen, sowie einer zusätzlichen Reduktion des Luftmassenstromes. Schliesslich kann auch eine kombinierte Kaltwasserrezirkulation sowohl zum Nassteil als auch zum Sammelbehälter erfolgen.

### Bezugszeichenliste

- 1: Kühlturmzelle
- 2: Kondensator
- 3: Kühlwasserpumpe
- 4: Kühlturmaustritt
- 5: Ventilator
- 6: Nassteil
- 7: Trockenteil
- 8: Wasserleitung zwischen Pos. 7 und 9
- 9: Verteileinrichtung
- 10: Sammelbecken
- 11: Bypassleitung
- 12: Ventile
- 13: Steigrohr
- 14: Abzweigung
- 15: Kaltwasserrezirkulationsleitung
- 16: Kaltwasserleitung
- W_{N}: Kühlwassermassenstrom Nassteil (gesamt)
- W_{N'}: Kühlwassermassenteilstrom Nassteil (direkt)
- W_{T}: Kühlwassermassenstrom Trockenteil
- W_{B}: Kühlwasserbypassmassenstrom Nassteil
- W_{BK}: Kaltwasserbypassmassenstrom Kondensator
- K_{N}: Kühlluftstrom Nassteil
- K_{T}: Kühlluftstrom Trockenteil

## Patentansprüche

1. Verfahren zum Betrieb eines auf eine bestimmte Last und auf vorgegebene klimatische Randbedingungen ausgelegten Nass-Trocken-Kühlturmes mit zumindestens teilweiser Reihenschaltung von Trockenteil (7) und Nassteil (6) bei extremen Wetterlagen zwecks Einhaltung der Schwadenfreiheit, wobei der Kühlturm über eine Kaltwasserleitung (16) mit einer Kühlwasserpumpe (3) und einem Kondensator (2) in Verbindung steht, **dadurch gekennzeichnet, dass** der Kaltwasserleitung (16) im Bereich zwischen Austritt Pumpe (3) und Eintritt Kondensator (2) ein Kaltwasserbypassmassenstrom (W_{BK}) entnommen wird, welcher über eine Kaltwasserrezirkulationsleitung (15) in den Kühlturm geführt wird, wobei die Grösse des Kaltwasserbypassmassenstromes (W_{BK}) durch Betätigung eines in der Leitung (15) angeordneten Stellorganes (12) den jeweiligen Bedingungen angepasst wird.

2. Verfahren nach Anspruch 1, **dadurch gekennzeichnet, dass** der Kaltwasserbypassmassenstromes (W_{BK}) dem für den Nassteil (6) vorgesehene Kühlwassermassenstrom vor dessen Eintritt in den Nassteil (6) beigemischt und anschliessend dieses Gemisch über das Nassteil (6) abgeleitet wird.

3. Verfahren nach Anspruch 1, **dadurch gekennzeichnet, dass** der Kaltwasserbypassmassenstromes (W_{BK}) in den Sammelbehälter (10) des Kühlturmes geleitet wird.

## Claims

1. Method for operating a wet/dry cooling tower designed for a specific load and for predetermined climatic boundary conditions, with an at least partial series connection of the dry part (7) and the wet part (6), in extreme weather situations, for the purpose of maintaining vapour freedom, the cooling tower being connected via a cold-water line (16) to a cooling-water pump (3) and a condenser (2), **characterized in that** a cold-water bypass mass flow (W_{BK}) is extracted from the cold-water line (16) in the region between the outlet of the pump (3) and the inlet of the condenser (2) and is led into the cooling tower via a cold-water recirculation line (15), the size of the cold-water bypass mass flow (W_{BK}) being adapted to the respective conditions by the actuation of an actuating member (12) arranged in the line (15).

2. Method according to Claim 1, **characterized in that** the cold-water bypass mass flow (W_{BK}) is admixed to the cooling-water mass flow provided for the wet part (6), before it enters the wet part (6), and this mixture is subsequently diverted via the wet part (6).

3. Method according to Claim 1, **characterized in that** the cold-water bypass mass flow (W_{BK}) is led into the reservoir (10) of the cooling tower.

## Revendications

1. Procédé pour faire fonctionner une tour de refroidissement humide / sèche conçue avec une charge déterminée et des conditions limites climatiques prédéfinies, comprenant un montage au moins partiellement en série de la section sèche (7) et de la section humide (6) dans des conditions climatiques extrêmes afin de conserver l'absence de buée, la tour de refroidissement étant connectée par le biais d'une conduite d'eau froide (16) à une pompe à eau de refroidissement (3) et à un condenseur (2), **caractérisé en ce qu'**un débit massique de dérivation d'eau froide (W_{BK}) est prélevé de la conduite d'eau froide (16) dans la région entre la sortie de la pompe (3) et l'entrée du condensateur (2), lequel est guidé par une conduite de recirculation d'eau froide (15) dans la tour de refroidissement, l'ampleur du débit massique de dérivation d'eau froide (W_{BK}) étant adaptée aux conditions respectives par l'actionnement d'un organe de réglage (12) disposé dans la conduite (15).

2. Procédé selon la revendication 1, **caractérisé en ce que** le débit massique de dérivation d'eau froide (W_{BK}) est mélangé au débit massique d'eau de refroidissement prévu pour la section humide (6) avant son entrée dans la section humide (6) et ce mélange est ensuite évacué par la section humide (6).

3. Procédé selon la revendication 1, **caractérisé en ce que** le débit massique de dérivation d'eau froide (W_{BK}) est guidé dans le réservoir collecteur (10) de la tour de refroidissement.
